# EUROPÄISCHE PATENTSCHRIFT

(11) **EP 2 772 323 B1**
(45) Veröffentlichungstag und Bekanntmachung des Hinweises auf die Patenterteilung: **24.02.2016**
(21) Anmeldenummer: 13194631.1
(22) Anmeldetag: 27.11.2013
(51) Int. Cl.: B21C 37/08, B23K 37/02, B23K 13/02, B23K 37/08

(54) **Hydraulische Rohrdurchführung sowie Baugruppe hierzu**
Hydraulic pipe feedthrough and module therefor
Passage de conduite hydraulique et module correspondant

(30) Priorität: 02.03.2013 DE 102013003540
(43) Veröffentlichungstag der Anmeldung: 03.09.2014
(73) Patentinhaber: Ernst Blissenbach GmbH, 42897 Remscheid (DE)
(72) Erfinder: Blissenbach, Ernst, 42897 Remscheid (DE); Löchner, Marcus, 42799 Leichlingen (DE); Blissenbach, Arnd, 42857 Remscheid (DE)
(74) Vertreter: Buse, Mentzel, Ludewig Patentanwaltskanzlei

(56) Entgegenhaltungen:
- EP-A2- 1 260 284
- DE-A1- 19 634 681
- US-A- 3 349 212

## Beschreibung

Die Erfindung betrifft eine Rohrdurchführung für Rohrinnenentgratungs-Systeme zum Verbinden mit einem Impeder und/oder einer zusätzlichen Verlängerungsstange und/oder einem Innennahthobel, bestehend aus einem Grundkörper Rohrdurchführung mit einer Aufnahmefläche, einem mit dem Grundkörper Rohrdurchführung verbundenen Steg, einem mit dem Steg verbundenen Aufnahmerohr, einer in dem Aufnahmerohr befestigten Leitungsstange und einer oder mehreren in der Rohrdurchführung verlaufenden Medienleitungen (siehe z.B. DE-A-196 34 681).

Derartige Rohrdurchführungen werden als Teil von Rohrinnenentgratungs-Systemen verwendet. Dabei werden die an der Rohrdurchführung befestigten Verlängerungsstangen, Impeder und Rohrinnennahthobel anhand der Rohrdurchführung durch einen Rohrschlitz eines zu produzierenden Rohres in das zu produzierende Rohr hineingeführt und im Rohr positioniert. Die Rohrdurchführung versorgt dabei den Innennahthobel und/oder einen dazwischen liegenden Impeder mittels an der Leitungsstange der Rohrdurchführung angebrachten Medienzuführungen mit den benötigten Kühl-, Rückkühl- und/oder Hydraulikmedien. Die Rohrdurchführung ist über den in den Rohrschlitz hineinragenden Steg über den Grundkörper Rohrdurchführung mit der Aufnahmefläche an einer Aufhängung angebracht, die wiederum an einem Fingerüst einer Rohrschweißanlage befestigt ist. Dabei wird der Rohrschlitz des zu produzierenden Rohres durch die Produktionsanlage in Richtung der Schweißstelle fortlaufend verengt. Um eine einwandfreie Funktion des Innennahthobels zu gewährleisten, wird der Innennahthobel insbesondere über einen Hydraulikmechanismus gegen die Innenwand des Rohres gedrückt. Dabei ergeben sich wegen der benötigten Andruckkräfte hohe Festigkeits- und Stabilitätserfordernisse an die Rohrdurchführung. Des Weiteren ist die Anbringung der Medienzuführungen an die Rohrdurchführung problematisch, da die Medienleitungen ebenfalls durch den Rohrschlitz geführt werden müssen und von den scharfen Kanten des zu produzierenden Rohres beschädigt werden können. Durch diese Erfordernisse muss die Rohrdurchführung an einer Stelle befestigt werden, an der der Rohrschlitz noch ausreichend breit ist.

Hierdurch ist es jedoch erforderlich, dass der Steg der Rohrdurchführung schmal genug ist, um die Gesamtabstände kurz zu halten. Dies verhindert Schwingungen der Rohrdurchführung, des Impeders, und des Innennahthobels und kann den Entgratungsprozess positiv beeinflussen.

Für die Ausführung mit schmalem Steg muss hochfestes Material verwendet werden, was die Kosten erhöht. Zusätzlich wird das Risiko von Verschmutzungen der Medienleitungen erhöht. Aus diesem Grund sind derartige Rohrdurchführungen in mehrere Teile zerlegbar, damit die Medienleitungen während Wartungsarbeiten einfacher gereinigt werden können. Insbesondere ist es möglich die Kupplung Rohrdurchführung von dem Aufnahmerohr zu lösen, so dass der Innennahthobel mit Impeder und Kupplung Rohrdurchführung von der Produktionsanlage einfach getrennt werden kann.

Bei bekannten Rohrdurchführungen wird die Kupplung Rohrdurchführung in das Aufnahmerohr gesteckt und mittels mehrerer Sicherungsstifte, die am Außenumfang des Aufnahmerohres eingeschraubt werden und in Nuten der Kupplung Rohrdurchführung eingreifen, befestigt und verklebt. Die Medienzuführungen sind an dem dem Impeder abgewandten Ende der Kupplung Rohrdurchführung mit Stange befestigt und müssen für die Wartungsarbeiten zusätzlich gelöst werden. All dies wirkt sich negativ auf die Stabilität und Festigkeit der Rohrdurchführung aus. Ein Wartungsprozess ist durch das vorherige Verkleben und Verstiften nur mit sehr großem Aufwand möglich.

Der Erfindung liegt daher die Aufgabe zugrunde, eine Rohrdurchführung zu schaffen, die besonders stabil, möglichst einfach zu warten und kostengünstig ist.

Bei einer Rohrdurchführung der eingangs beschriebenen Art wird die Aufgabe erfindungsgemäß dadurch gelöst, dass das Aufnahmerohr an seiner Innenumfangsfläche einen Innensechskant aufweist und die Kupplung Rohrdurchführung an ihrer Außenumfangsfläche einen zu dem Innensechskant des Aufnahmerohres passenden Außensechskant und an ihrem dem Impeder und/oder der Verlängerungsstange abgewandten Ende ein Außengewinde an ihrer Außenumfangsfläche aufweist und mittels einem auf dem Außengewinde aufgeschraubten Konterkegel in dem Aufnahmerohr befestigt ist. Eine solche Rohrdurchführung ermöglicht einen besonders festen und parallelen Sitz der Kupplung Rohrdurchführung in dem Aufnahmerohr, da die Kupplung Rohrdurchführung durch die Sechskantführung verdrehsicher in dem Aufnahmerohr gelagert ist und durch den Konterkegel besonders stabil in dem Aufnahmerohr axial fixiert ist. Zudem stabilisieren die axial verlaufenden Sechskantflächen die Kupplung Rohrdurchführung gegen senkrecht zur Rohrachse auftretende Kräfte und Bewegungen.

In einer Ausführungsform der Erfindung weist die Kupplung Rohrdurchführung an ihrem dem Impeder und/oder der Verlängerungsstange zugewandten Ende eine schräg zur Rohrachse verlaufende Anlagefläche und neben der Anlagefläche an ihrer Außenumfangsfläche ein Außengewinde, insbesondere ein Rechtsgewinde auf. Auf dem Außengewinde ist ein Spannschloss zur Verbindung der Kupplung Rohrdurchführung mit dem Impeder oder dem Innennahthobel aufgeschraubt. Dies ermöglicht eine besonders einfache, stabile und dichtende Verbindung der Kupplung Rohrdurchführung mit dem Impeder oder dem Innennahthobel, was wiederum die Stabilität verbessert und die Wartung vereinfacht.

Zur weiteren Ausgestaltung der Erfindung laufen in dem Steg mehrere Kanalbohrungen, die in Richtung der Rohrachse des Aufnahmerohres hintereinander angeordnet sind und der Steg weist insbesondere eine Dicke zwischen 1,2 mm und 3 mm und die Kanalbohrungen weisen bevorzugt einen Durchmesser zwischen 0,5 mm und 1,5 mm auf. Die Aufteilung der Medienleitungen in mehrere hintereinander angeordnete, möglichst dünne Kanalbohrungen ermöglicht eine besonders dünne Ausgestaltung des Steges, die es wiederum ermöglicht, die Rohrdurchführung besonders nah an die Schweißstelle des zu produzierenden Rohres zu positionieren, wodurch die Rohrdurchführung kürzer ausgebildet werden kann und damit Schwingungen in der Rohrdurchführung reduziert werden und die Reinigung der Medienleitungen während der Wartung vereinfacht wird.

In einer bevorzugten Ausgestaltung der Erfindung mündet mindestens ein Bündel von Kanalbohrungen einerseits in einer Aufnahmefläche des Aufnahmeblocks und andererseits in einem Medienverbindungsbereich an der Innenumfangsfläche des Aufnahmerohres, wobei die Kupplung Rohrdurchführung mindestens eine Medienleitung aufweist, die einerseits an einer Anlagefläche der Kupplung Rohrdurchführung und andererseits in einem Mündungsbereich an der Außenumfangsfläche der Kupplung Rohrdurchführung mündet und wobei der Innendurchmesser des Aufnahmerohres in dem Medienverbindungsbereich etwas größer ist als der Außendurchmesser der Kupplung Rohrdurchführung im Mündungsbereich und die Mündung der Medienleitung der Kupplung Rohrdurchführung so positioniert ist, dass sie dem Medienverbindungsbereich des Aufnahmerohres im montierten Zustand gegenüber liegt. Dadurch, dass die Medienleitungen über den Grundkörper Rohrdurchführung, durch den Steg, durch das Aufnahmerohr und durch die Kupplung Rohrdurchführung mit dem Impeder und/oder dem Innennahthobel verbunden werden, können die Medienzuführungen von außerhalb des Produktionsrohres zugeführt und angeschlossen werden, so dass die Medienzuführungen nicht mehr durch die scharfen Kanten des Produktionsrohres beschädigt werden können und die Wartung der Rohrdurchführung vereinfacht wird, da die Medienzuführungen nicht mehr demontiert werden müssen.

Weiterhin umfasst die Erfindung noch eine Baugruppe, bestehend aus einer zuvor beschriebenen Rohrdurchführung und einer damit zusammen wirkenden Aufhängung, welche als Drehsegment ausgebildet ist. An der Rohrdurchführung befindet sich eine Kupplung mit einer Anlagefläche, welche mit einer Gegenanlagefläche an der Aufhängung zusammen wirkt. Hierdurch ist eine absolut planparallele Ausrichtung der Rohrdurchführung möglich. Durch die spezielle Aufhängung in Kombination mit der Rohrdurchführung wird eine besonders hohe Qualität der Schweißnaht des Rohres sichergestellt und auch Fertigungstoleranzen des Rohres können problemlos ausgeglichen werden.

Die vorgenannten sowie beanspruchten und in den Ausführungsbeispielen beschriebenen erfindungsgemäß zu verwendenden Bauteile unterliegen in ihrer Größe, Form, Gestaltung, Materialauswahl und technischen Konzeptionen keinen besonderen Ausnahmebedingungen, so dass die in dem Anwendungsgebiet bekannten Auswahlkriterien uneingeschränkt Anwendung finden können. Weitere Einzelheiten, Merkmale und vorteilhafte Weiterbildungen der Erfindung ergeben sich aus den im Folgenden beschriebenen und in den Zeichnungen dargestellten Ausführungsbeispielen sowie aus den Unteransprüchen.

Es zeigen:
- Fig. 1:: eine Seitenansicht senkrecht zur Rohrachse einer erfindungsgemäßen Rohrdurchführung mit Teillängsschnitten durch den Grundkörper Rohrdurchführung und die Verbindungsmittel, mit Abrissbolzen
- Fig. 2:: eine Stirnansicht einer erfindungsgemäßen Rohrdurchführung in Richtung der Rohrachse ausgehend von der Seite des Innennahthobels mit Teilquerschnitt A-A durch das Aufnahmerohr,
- Fig. 3:: eine Draufsicht auf die Aufnahmefläche des Grundkörpers Rohrdurchführung senkrecht zur Rohrachse einer erfindungsgemäßen Rohrdurchführung mit Teillängsschnitt durch das Aufnahmerohr,
- Fig. 4:: eine Seitenansicht gemäß Fig. 1, ohne Abrissbolzen,
- Fig. 5:: eine Seitenansicht gemäß Fig. 4 als Baugruppe mit Aufhängung,
- Fig. 6:: eine Stirnansicht gemäß Fig. 2 als Baugruppe.

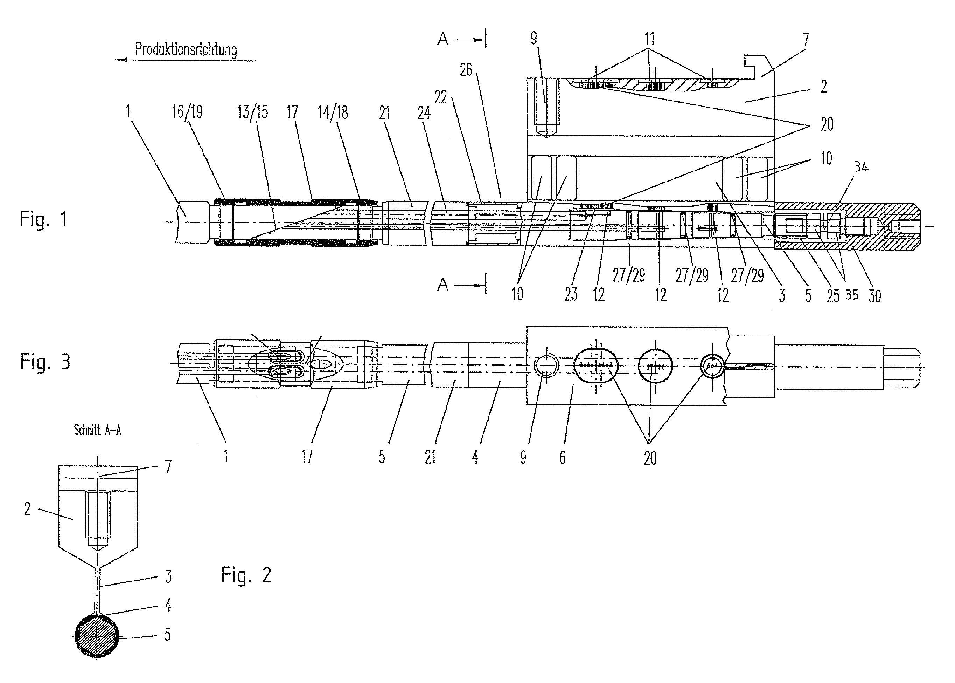

In Fig. 1, Fig. 2 und Fig. 3 ist eine erfindungsgemäße Rohrdurchführung für Rohrinnenentgratungs-Systeme zur Entgratung einer Innenschweißnaht eines nicht dargestellten zu produzierenden Rohres mittels eines nicht dargestellten Innennahthobels dargestellt. Die Rohrdurchführung dient insbesondere zur Befestigung und Positionierung eines teilweise dargestellten Impeders 1 und des damit verbundenen nicht dargestellten Innennahthobels. Außerdem dient die Rohrdurchführung zum Übertragen von Hydraulik- und/oder Kühl- und/oder Rückkühl- und/oder Reinigungsmedien zum Impeder 1 und/oder zum Innennahthobel.

Die Rohrdurchführung weist einen Grundkörper Rohrdurchführung 2 zur Befestigung der Rohrdurchführung an einer nicht dargestellten Aufhängung auf. Die Aufhängung ist im Betrieb des Rohrinnenentgratungs-Systems an einer nicht dargestellten Rohrschweißanlage befestigt. Der Grundkörper Rohrdurchführung 2 ist über einen Steg 3 mit einem Aufnahmerohr 4 und einer in das Aufnahmerohr 4 eingeführten Kupplung Rohrdurchführung 5 verbunden. Die Kupplung Rohrdurchführung 5 weist an ihrem dem Impeder 1 zugewandten Ende Verbindungsmittel zur Verbindung mit dem Impeder 1 auf.

Der Steg 3 ragt im montierten Zustand durch einen noch nicht verschweißten Rohrschlitz des zu produzierenden Rohres in das Rohr hinein. Die Rohrdurchführung ist im montierten Zustand mit dem Impeder 1 beziehungsweise dem Innennahthobel voran in das zu produzierende Rohr eingeführt. Die Kupplung Rohrdurchführung 5 und das Aufnahmerohr 4 verlaufen dabei parallel zur Achse des zu produzierenden Rohres und sind von der Innenwand des zu produzierenden Rohres teilweise umschlossen.

Der Grundkörper Rohrdurchführung 2 weist an seiner der Aufhängung 31 zugewandten Seite eine Aufnahmefläche 6 auf und besitzt zur Befestigung der Rohrdurchführung an seiner dem Impeder 1 abgewandten Seite der Aufnahmefläche 6 eine als Haken ausgebildete Kupplung 7 und an der gegenüberliegenden Seite in der Aufnahmefläche 6 eine Gewindebohrung 9. Die Kupplung 7 umfasst eine Anlagefläche 32 und wird im montierten Zustand in ein entsprechendes Gegenstück der Aufhängung 31, welches eine Gegenanlagefläche 33 aufweist, eingehakt und ermöglicht zusammen mit einer nicht dargestellten Zylinderschraube, die durch eine Bohrung in der Aufhängung 31 durchgeführt und in die Gewindebohrung 9 eingeschraubt wird, ein festes, stabiles und insbesondere bezüglich der Parallelität zur Rohrachse genaues Fixieren der Rohrdurchführung an der Aufhängung 31. Dies wird später noch näher beschrieben werden.

Der Grundkörper Rohrdurchführung 2 hat im Querschnitt zur Rohrachse ein hausförmiges unregelmäßiges Fünfeck, das aus einer rechteckigen Grundform und einem aufgesetzten gleichschenkeligen Dreieck besteht, wobei die dem Dreieck gegenüberliegende Grundseite des Rechtecks die Kante der Aufnahmefläche 6 bildet und die dem Rechteck gegenüberliegende Spitze des Dreiecks in den Steg 3 übergeht. Der Steg 3 verläuft im Querschnitt in Fig. 2 senkrecht zur Aufnahmefläche 6 in Richtung des Aufnahmerohres 4 und erstreckt sich in der Seitenansicht in Fig. 1 über die Länge des gesamten Grundkörpers Rohrdurchführung 2. Der Steg 3 geht an seinem dem Grundkörper Rohrdurchführung 2 gegenüberliegende Enden in das Aufnahmerohr 4 über.

Die Außendurchmesser des Aufnahmerohres 4 und der Kupplung Rohrdurchführung 5 liegen insbesondere in einem Bereich von 5 mm bis 80 mm und sind so bemessen, dass sie einen kleinen Abstand von der Innenwand des zu produzierenden Rohres einhalten und sind abhängig vom Durchmesser des zu produzierenden Rohres, so dass das Rohr während der Produktion an dem Aufnahmerohr 4 und der Kupplung Rohrdurchführung 5 ohne Berührung vorbeigeführt werden kann. Um dabei den Steg 3 vor den vorbeilaufenden Rohrkanten zu schützen, sind an beiden Seiten des Stegs 3 sowohl im in Richtung der Rohrachse vorderen als auch im hinteren Bereich des Steges 3 Hartmetallplatten 10 angebracht.

Die Anzahl der Medienzuführungen für die Rohrdurchführung kann variieren und ist abhängig von den zur Verfügung gestellten Funktionen für den Innennahthobel und/oder den Impeder, wie Hydraulik, Kühlung und Rückkühlung. Die Medienzuführungen für die Hydraulik-, Kühlung- und Rückkühlung werden an die Aufhängung angeschlossen. Die dargestellte Ausführungsform ist für drei Medienzuführungen ausgelegt. Dazu weist der Grundkörper Rohrdurchführung 2 in der Aufnahmefläche 6 drei Vertiefungen 11 auf. Die Vertiefungen 11 sind derart in der Aufnahmefläche 6 positioniert, dass sie jeweils einer Mündung einer Medienzuführung in der Aufhängung gegenüberliegen. Vorzugsweise sind in den Mündungen der Aufhängung oder in den Vertiefungen 11 nicht dargestellte Dichtungsmittel angeordnet. Jeder Medienzuführung ist ein Bündel von Kanalbohrungen 20 zugeordnet. Die Bündel von Kanalbohrungen 20 verlaufen jeweils von der Vertiefung 11 durch den Grundkörper Rohrdurchführung 2 und den Steg 3 und münden in einem an der Innenumfangsfläche des Aufnahmerohres 4 angeordneten hohlzylindrischen Medienverbindungsbereich 12. Die Kanalbohrungen 20 eines Bündels verlaufen dabei parallel und sind in Richtung der Rohrachse hintereinander angeordnet und haben insbesondere einen Durchmesser zwischen 0,5 mm und 1,5 mm. Die Aufteilung einer Medienzuführung in mehrere besonders dünne und hintereinander angeordnete Kanalbohrungen 20 erlaubt eine besonders dünne Ausbildung des Steges 3, ohne dabei den Transport der Medien negativ zu beeinflussen. Insbesondere hat der Steg 3 eine Dicke von 1,2 mm bis 3 mm. Die Anzahl der Kanalbohrungen 20 pro Bündel ist abhängig von dem benötigten Querschnitt für eine Medienzuführung, insbesondere in Abhängigkeit der Eigenschaften des Mediums und des benötigten Drucks und abhängig vom Rohrdurchmesser des zu produzierenden Rohres.

Das Aufnahmerohr 4 weist an seinem der Kupplung Rohrdurchführung 5 zugewandten Ende seiner Innenumfangsfläche einen Innensechskant 26 auf. Der erste Medienverbindungsbereich 12 ist im Anschluss an den Innensechskant 26 auf der Innenumfangsfläche des Aufnahmerohres 4 angeordnet. Im dargestellten Ausführungsbeispiel weist das Aufnahmerohr 4 drei in Richtung der Rohrachse hintereinander angeordnete Medienverbindungsbereiche 12 auf. Dabei ist der Innendurchmesser des ersten Medienverbindungsbereichs 12 etwas kleiner als der Innendurchmesser des Innensechskants 26, und der Innendurchmesser der folgenden Medienverbindungsbereiche 12 jeweils etwas kleiner als der Innendurchmesser des vorherigen Medienverbindungsbereichs 12. Im Anschluss an jeden Medienverbindungsbereich 12 befindet sich an der Innenumfangsfläche eine hohlzylindrische Dichtungsfläche 28. Der Innendurchmesser der Dichtungsfläche 28 ist etwas kleiner als der Innendurchmesser des davor liegenden Medienverbindungsbereichs 12. Vorzugsweise entspricht der Innendurchmesser der Dichtungsfläche 28 dem Innendurchmesser des jeweils dahinter liegenden Medienverbindungsbereichs 12.

Die Kupplung Rohrdurchführung 5 weist an ihrem dem Impeder 1 zugewandten Ende Verbindungsmittel zur Verbindung mit dem Impeder 1 auf. Die Verbindungsmittel bestehen aus einer schräg zur Rohrachse verlaufenden Anlagefläche 13, einem in Richtung des Aufnahmerohres 4 an die Anlagefläche 13 anschließenden, an der Umfangsfläche der Kupplung Rohrdurchführung 5 verlaufenden Außengewinde 14 und einem auf das Außengewinde 14 von dem Impeder 1 zugewandten Ende her aufgeschraubten Spannschloss 17. Das Außengewinde 14 ist insbesondere ein Rechtsgewinde. Das Spannschloss 17 ist rohrförmig ausgebildet und weist an den Enden zwei gegenläufige Innengewinde 18, 19 an seiner Umfangsinnenfläche auf. Das Spannschloss 17 wirkt mit einem Außengewinde 16 an der Außenumfangsfläche des Impeders 1 zusammen, wobei das Außengewinde 16 des Impeders 1 umgekehrt drehend zum Außengewinde 14 der Kupplung Rohrdurchführung 5 ausgebildet ist. Das Spannschloss 17 zieht durch Drehung die Anlagefläche 13 der Kupplung Rohrdurchführung 5 gegen eine entsprechende Anlagefläche 15 des Impeders 1, bis die Kupplung Rohrdurchführung 5 und der Impeder 1 fest und stabil verbunden sind. In der Kupplung Rohrdurchführung 5 verlaufen Medienleitungen 24, die einseitig im Bereich der Anlagefläche 13 münden und mit entsprechenden Medienleitungen des Impeders 1, die in der Anlagefläche 15 des Impeders 1 münden, fluchten.

An das Außengewinde 14 schließt sich in Richtung des Aufnahmerohres 4 ein zylindrischer Bereich 21 der Kupplung Rohrdurchführung 5 an, dessen Außendurchmesser dem Außendurchmesser des Aufnahmerohres 4 ungefähr entspricht. Im Anschluss an den zylindrischen Bereich 21 weist die Kupplung Rohrdurchführung 5 einen zu dem Innensechskant 26 des Aufnahmerohres 4 passenden Außensechskant 22 auf, dessen Außendurchmesser etwas kleiner ist als der Außendurchmesser des zylindrischen Bereichs 21. Der Außensechskant 22 der Kupplung Rohrdurchführung 5 und der Innensechskant 26 des Aufnahmerohres 4 dienen als Verdrehsicherung und Führung beim Einführen der Kupplung Rohrdurchführung 5 in das Aufnahmerohr 4 und ermöglichen eine besonders stabile Verbindung zwischen Aufnahmerohr 4 und Kupplung Rohrdurchführung 5. Der Durchmesser des Außensechskants 22 und des Innensechskants 26 sind im tausendstel Millimeterbereich toleriert, um eine besonders genaue Führung und hohe Parallelität der Kupplung Rohrdurchführung 5 in beziehungsweise mit dem Aufnahmerohr 4 zu gewährleisten.

Im Anschluss an den Außensechskant 22 weist die Kupplung Rohrdurchführung 5 mindestens einen zylindrischen Mündungsbereich 23 an ihrer Außenumfangsfläche auf, in dem die andere Mündung der Medienleitung 24 angeordnet ist. In dem dargestellten Ausführungsbeispiel weist die Kupplung Rohrdurchführung 5 drei auf der Kupplung Rohrdurchführung 5 in Richtung der Rohrachse hintereinander angeordnete Mündungsbereiche 23 auf, wobei der Außendurchmesser des jeweils nächsten Mündungsbereiches 23 etwas kleiner ist als der vorherige. Die Mündungsbereiche 23 sind derart auf der Kupplung Rohrdurchführung 5 angeordnet, dass sie im eingebauten Zustand jeweils einem Medienverbindungsbereich 12 des Aufnahmerohrs 4 gegenüberliegen. Die Mündungsbereiche 23 weisen kurz vor ihrem Ende jeweils eine Dichtungsnut 27 an ihrer Außenumfangsfläche auf, in der sich eine Dichtung 29, insbesondere ein O-Dichtring befindet. Der Innendurchmesser eines Medienverbindungsbereiches 12 des Aufnahmerohres 4 ist jeweils etwas größer als der Außendurchmesser des gegenüberliegenden Mündungsbereiches 23 der Kupplung Rohrdurchführung 5, so dass sich zwischen dem Aufnahmerohr 4 und der Kupplung Rohrdurchführung 5 im Medienverbindungsbereich 12 eine Verbindungskammer bildet, die die jeweilige Medienleitung 24 der Kupplung Rohrdurchführung 5 und das jeweilige Bündel von Kanalbohrungen 20 des Aufnahmerohrs 4 miteinander verbindet. Vorzugsweise entspricht der Außendurchmesser eines Mündungsbereiches 23 der Kupplung Rohrdurchführung 5 dem Innendurchmesser des gegenüberliegenden Dichtungsbereiches 28 der Medienverbindungsbereiche 12 des Aufnahmerohres 4. Jede Dichtungsnut 27 der Kupplung Rohrdurchführung 5 liegt einem Dichtungsbereich 28 des Aufnahmerohres 4 gegenüber und die jeweilige Gruppe von Dichtungsnut 27, Dichtung 29 und Dichtungsbereich 28 trennen zusammen die verschiedenen Verbindungskammern voneinander dichtend ab. An den letzten Mündungsbereich 23 schließt sich an der Außenumfangsfläche der Kupplung Rohrdurchführung 5 ein weiteres Außengewinde 25 an, wobei der Außendurchmesser des Außengewindes 25 etwas kleiner ist als der Außendurchmesser des letzten Mündungsbereiches 23. Die Kupplung Rohrdurchführung 5 ist mit dem Außengewinde 25 voran durch das Aufnahmerohr 4 durchgeführt, wobei das Außengewinde 25 im montierten Zustand an dem dem Impeder 1 abgewandten Ende des Aufnahmerohres 4 aus dem Aufnahmerohr 4 herausragt. Im montierten Zustand wird die Kupplung Rohrdurchführung 5 durch einen mit einem Innengewinde versehenden Konterkegel 30 in dem Aufnahmerohr 4 befestigt. Der Konterkegel 30 ist auf das Außengewinde 25 aufgeschraubt und gegen die dem Impeder 1 gegenüber liegende Stirnwand des Aufnahmerohrs 4 angezogen, so dass sie die Kupplung Rohrdurchführung 5 in das Aufnahmerohr 4 zieht bis die Stirnwand des zylindrischen Bereichs 21 der Kupplung Rohrdurchführung 5 an der anderen Stirnwand des Aufnahmerohres 4 anliegt.

In der in Fig. 1 gezeigten Ausführungsform der Erfindung weist die Rohrdurchführung eine Sollbruchstelle auf. Diese ist vorteilhafterweise in Form eines Abrissbolzens 35 ausgeführt, welcher eine gezielte Schwächung aufweist.

Der Abrissbolzen ist dabei mit seiner einen Seite in der Kupplung Rohrdurchführung und mit seiner anderen Seite am Konterkegel angeordnet. Dadurch wird im Falle eines Problems beim Schweißprozess ein Abreißen an der bestimmten Sollbruchstelle bzw. der gezielten Schwächung des Abrissbolzens provoziert, so dass das restliche Rohrinnenentgratungs-System vor Beschädigung geschützt wird. Hierdurch können teure Reparaturen oder gar ein Austausch des gesamten Systems vermieden werden.

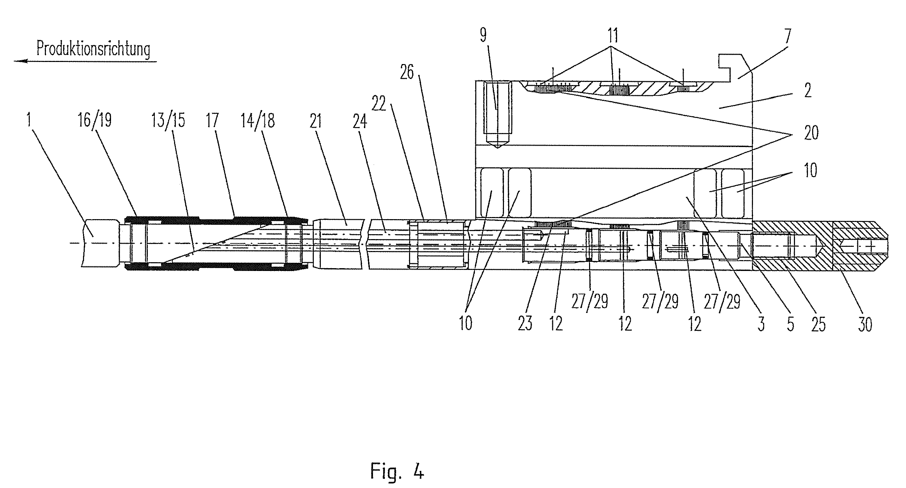

Fig. 4 zeigt ein weiteres Ausführungsbeispiel der Rohrdurchführung in analoger Weise wie Fig. 1, jedoch ohne den dort dargestellten Abrissbolzen 35. Hierdurch verkürzt sich die Baulänge des Konterkegels 30 entsprechend. Alle übrigen Bauteile bleiben jedoch unverändert.

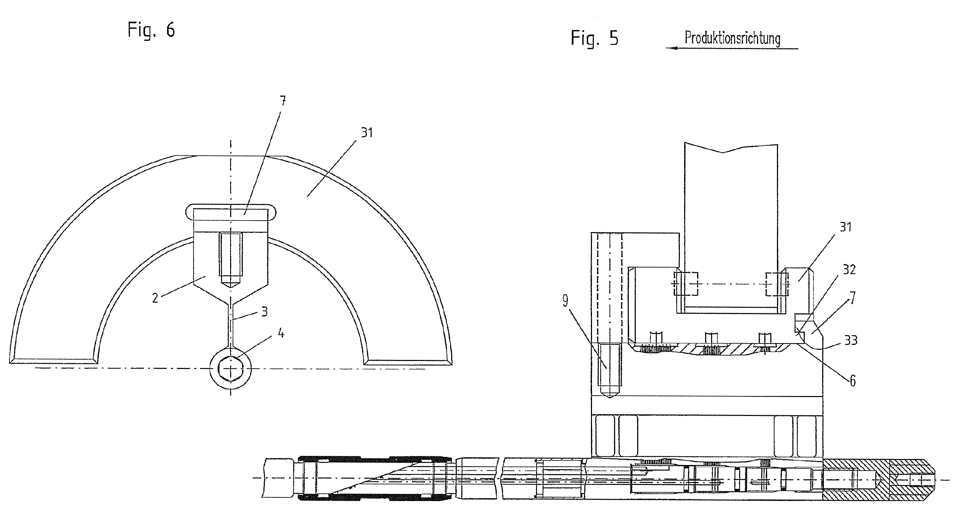

In den Fig. 5 und 6 ist eine erfindungsgemäße Baugruppe gezeigt. Die bereits beschriebene Rohrdurchführung ist an einer Aufhängung 31 angeordnet. Die Aufhängung 31 ist dabei als Drehsegment ausgebildet und lässt sich bevorzugt um bis zu 20° drehen. Hierdurch können Fertigungstoleranzen des herzustellenden Rohres ausgeglichen werden, beispielsweise wenn die zu schweißende Stelle des Rohres nicht exakt mit der Rohrdurchführung fluchtet. An der Rohrdurchführung ist eine Kupplung 7 vorgesehen, welche eine Anlagefläche 32 aufweist, wobei diese mit einer entsprechenden Gegenanlagefläche 33 an der Aufhängung 31 in Wirkverbindung bringbar ist. Durch das Zusammenwirken von Anlagefläche 32 und Gegenanlagefläche 33 ist ein absolut planparalleles Ausrichten der Rohrdurchführung gewährleistet, wodurch die Arbeitsgenauigkeit der Rohrdurchführung enorm erhöht wird.

### Bezugszeichenliste:

- 1: Impeder
- 2: Grundkörper Rohrdurchführung
- 3: Steg
- 4: Aufnahmerohr (gehört zum Grundkörper)
- 5: Kupplung Rohrdurchführung
- 6: Aufnahmefläche
- 7: Kupplung
- 9: Gewindebohrung
- 10: Hartmetallplatten
- 11: Vertiefung
- 12: Medienverbindungsbereich
- 13: Anlagefläche (Kupplung)
- 14: Außengewinde
- 15: Anlagefläche (Kupplung)
- 16: Außengewinde
- 17: Spannschloss
- 18: Innengewinde
- 19: Innengewinde
- 20: Kanalbohrung
- 21: Zylindrischer Bereich (Kupplung Rohrdurchführung)
- 22: Außensechskant
- 23: Mündungsbereich
- 24: Medienleitung
- 25: Außengewinde
- 26: Innensechskant
- 27: Dichtungsnut
- 28: Dichtungsbereich
- 29: Dichtung
- 30: Konterkegel
- 31: Aufhängung
- 32: Anlagefläche
- 33: Gegenanlagefläche
- 34: Sollbruchstelle
- 35: Abrissbolzen

## Patentansprüche

1. Rohrdurchführung für Rohrinnenentgratungs-Systeme zur Verbindung mit einem Impeder (1) und/oder einer zusätzlichen Verlängerungsstange in Verbindung mit dem Einsatz eines Innennahthobels, bestehend aus einem Grundkörper Rohrdurchführung (2), einem mit dem Grundkörper Rohrdurchführung (2) verbundenen Steg (3), einem mit dem Steg (3) verbundenem Aufnahmerohr (4), einer in dem Aufnahmerohr (4) befestigten Kupplung Rohrdurchführung (5) und mehreren in der Rohrdurchführung verlaufenden Medienleitungen (24),
**dadurch gekennzeichnet,**
**dass** das Aufnahmerohr (4) an seiner Innenumfangsfläche einen Innensechskant (26) aufweist und die Kupplung Rohrdurchführung (5) an ihrer Außenumfangsfläche einen zu dem Innensechskant (26) des Aufnahmerohres (4) passenden Außensechskant (22) und an ihrem dem Impeder (1) abgewandten Ende ein Außengewinde (25) an ihrer Außenumfangsfläche aufweist und mittels einem auf das Außengewinde (25) aufgeschraubten Konterkegel (30) in dem Aufnahmerohr (4) befestigt ist.

2. Rohrdurchführung nach Anspruch 1, **dadurch gekennzeichnet, dass** die Kupplung Rohrdurchführung (5) an ihrem dem Impeder (1) zugewandten Ende eine schräg zur Rohrachse verlaufende Anlagefläche (13) aufweist und neben der Anlagefläche (13) an ihrer Außenumfangsfläche ein Außengewinde (14), insbesondere ein Rechtsgewinde, aufweist und auf dem Außengewinde (14) ein Spannschloss (17) zur Verbindung der Kupplung Rohrdurchführung (5) mit dem Impeder (1) oder dem Innennahthobel aufgeschraubt ist.

3. Rohrdurchführung nach einem der Ansprüche 1 oder 2, **dadurch gekennzeichnet, dass** in dem Steg (3) mehrere Kanalbohrungen (20) verlaufen, die in Richtung der Rohrachse des Aufnahmerohres (4) hintereinander angeordnet sind, und der Steg (3) insbesondere eine Dicke zwischen 1,2 mm und 3 mm aufweist, und die Kanalbohrungen (20) insbesondere einen Durchmesser zwischen 0,5 mm und 1,5 mm aufweisen.

4. Rohrdurchführung nach Anspruch 3, **dadurch gekennzeichnet, dass** mindestens ein Bündel von Kanalbohrungen (20) einerseits in einer Aufnahmefläche (6) des Grundkörpers Rohrdurchführung (2) und andererseits in einem Medienverbindungsbereich (12) an der Innenumfangsfläche des Aufnahmerohres (4) mündet.

5. Rohrdurchführung nach Anspruch 4, **dadurch gekennzeichnet, dass** die Kupplung Rohrdurchführung (5) mindestens eine Medienleitung (24) aufweist, die einerseits an der Auflagefläche (13) der Kupplung Rohrdurchführung (5) und andererseits in einen Mündungsbereich (23) an der Außenumfangsfläche der Kupplung Rohrdurchführung (5) mündet.

6. Rohrdurchführung nach Anspruch 5, **dadurch gekennzeichnet, dass** der Innendurchmesser des Aufnahmerohres (4) in dem Medienverbindungsbereich (12) etwas größer ist als der Außendurchmesser der Kupplung Rohrdurchführung (5) im Mündungsbereich (23), und die Mündung der Medienleitung (24) der Kupplung Rohrdurchführung (5) so positioniert ist, dass sie dem Medienverbindungsbereich (12) des Aufnahmerohres (4) im montiertem Zustand gegenüberliegt.

7. Rohrdurchführung nach einem der Ansprüche 1 bis 6, **dadurch gekennzeichnet, dass** das Aufnahmerohr (4) an seinem Innenumfang einen Dichtungsbereich (28), wie eine Dichtungsfläche aufweist und die Kupplung Rohrdurchführung (5) in : ihrer Außenumfangsfläche eine Dichtungsnut (27) und eine in der Dichtungsnut (27) angeordnete Dichtung (29) aufweist, und die Dichtung (29) im montierten Zustand der Kupplung Rohrdurchführung (5) gegenüber des Dichtungsbereichs (28) bzw. der Dichtungsfläche des Aufnahmerohres (4) positioniert ist.

8. Rohrdurchführung nach einem der Ansprüche 1 bis 7, **dadurch gekennzeichnet, dass** die Kupplung Rohrdurchführung (5) eine Sollbruchstelle (34) in Form eines Abrissbolzens (35) aufweist, welcher mit seiner einen Seite in der Kupplung Rohrdurchführung (5) und mit seiner anderen Seite am Konterkegel (30) angeordnet ist, wobei der Abrissbolzen (35) eine gezielte Schwächung (36) aufweist.

9. Baugruppe bestehend aus einer Rohrdurchführung nach einem der Ansprüche 1 bis 8 und einer als Drehsegment ausgebildeten Aufhängung (31), welche vorzugsweise um bis zu 20° verdrehbar ist, und die dazu geeignet ist die Rohrdurchführung zu halten, wobei an der Rohrdurchführung eine Kupplung (7) vorgesehen ist, die eine Anlagefläche (32) aufweist, während am Drehsegment eine Gegenanlagefläche (33) vorgesehen ist und wobei die Anlagenfläche (32) und die Gegenanlagefläche (33) miteinander in Wirkverbindung bringbar sind.

## Claims

1. Pipe feedthrough for internal pipe deburring systems for connection to an impeder (1) and/or an additional extension rod in connection with the use of an internal seam plane, comprising of a base-body pipe feedthrough (2), a fillet (3) connected to the base-body pipe feedthrough (2), a reception pipe (4) connected to the fillet (3), a coupling pipe feedthrough (5) attached in the reception pipe (4) and multiple lines (24) for the media installed in the pipe feedthrough,
**characterized in that**,
the reception pipe (4) features an internal hexagon (26) on its inner circumferential surface and the coupling pipe feedthrough (5) features an external hexagon (22) on its outer circumferential surface compatible to the internal hexagon (26) of the reception pipe (4) and an external thread (25) on its outer circumferential surface at the end furthest away from the impeder (1) and is attached in the reception pipe (4) by a counter-taper (30) screwed onto the external thread (25).

2. Pipe feedthrough in accordance with claim 1, **characterized in that** the coupling pipe feedthrough (5) features a chamfer on the support surface (13) running parallel to the pipe axis chamfer on its end furthest away from the impeder (1) and, in addition to the support surface (13), features an external thread (14) on its outer circumferential surface, in particular a right-hand thread and, on the external thread (14), a turnbuckle (17) for connecting the coupling pipe feedthrough (5) to the impeder (1) or the internal seam plane is screwed on.

3. Pipe feedthrough in accordance with one of the claims 1 or 2, **characterized in that** there are multiple channel bores (20) running in the fillet (3), arranged consecutively in the direction of the axis of the reception pipe (4) and, in particular the fillet (3), has a thickness of between 1.2 mm and 3 mm and, in particular, the channel bores (20) have a diameter of between 0.5 mm and 1.5 mm.

4. Pipe feedthrough in accordance with claim 3, **characterized in that**, on the one hand, a minimum of one cluster of the channel bores (20) lead into a reception area (6) of the base-body of the pipe feedthrough (2) and, on the other hand, into a media connection area (12) on the inner circumferential surface of the reception pipe (4).

5. Pipe feedthrough in accordance with claim 4, **characterized in that** the coupling pipe feedthrough (5) features a minimum of one line (24) for the media that, on the one hand, leads to the support surface (13) of the coupling pipe feedthrough (5) and, on the other hand, into an outlet (23) on the outer circumferential surface of the coupling pipe feedthrough (5).

6. Pipe feedthrough in accordance with claim 5, **characterized in that**, in the media connection area (12), the internal diameter of the reception pipe (4) is somewhat larger than the external diameter of the coupling pipe feedthrough (5) in the outlet (23) and the outlet of the line (24) for the media of the coupling pipe feedthrough (5) is positioned so that, when installed, it is opposite to the media connection area (12) of the reception pipe (4).

7. Pipe feedthrough in accordance with one of the claims 1 to 6, **characterized in that** the reception pipe (4) features a sealing area (28) on its inner circumference, such as a sealing surface and the coupling pipe feedthrough (5) features a seal groove (27) in its outer circumferential surface and a seal (29) arranged in the seal groove (27) and, when the coupling pipe feedthrough (5) is installed, the seal (29) is positioned opposite to the sealing surface (28) and the sealing surface of the reception pipe (4).

8. Pipe feedthrough in accordance with one of the claims 1 to 7, **characterized in that** the coupling pipe feedthrough (5) features a predetermined breaking point (34) in the form of a break-stud bolt (35), which is arranged with one of its side in the coupling pipe feedthrough (5) and with its other side on the counter-taper (30), whereby, the break-stud bolt (35) features a specified weakness (36).

9. Module comprising of a pipe feedthrough in accordance with one of the claims 1 to 8 and a suspension (31) formed as a rotating segment, which preferably can be rotated up to 20° and which is suitable to hold the pipe feedthrough, whereby, a coupling (7) is provided on the pipe feedthrough which features a support surface (32), whilst a counter support surface (33) is provided on the rotating segment and, whereby, the support surface (32) and the counter support surface (33) can be brought into operative effect with one another.

## Revendications

1. Passage de conduite pour systèmes d'ébavurage interne de conduites, à relier à un Impeder (1) et/ou à une barre prolongatrice supplémentaire en liaison avec la mise en oeuvre d'un rabot à cordon de soudure interne, comprenant un corps de base (2) formant le passage de conduite, une nervure (3) reliée au corps de base (2) formant de passage de conduite, un tube réceptacle (4) relié avec la nervure (3), un raccord (5) de passage de conduite fixé dans le tube réceptacle (4) et plusieurs conduites de fluides (24) circulant dans le passage de conduite,
**caractérisé en ce que**
le tube réceptacle (4) présente une géométrie hexagonale interne (26) contre sa surface circonférentielle interne et que le raccord (5) du passage de conduite présente, sur sa surface circonférentielle externe, une géométrie (22) hexagonale externe épousant la géométrie (26) hexagonale interne du tube réceptacle (4) et, sur son côté opposé à l'Impeder (1), un filetage externe (25) situé sur sa surface circonférentielle externe, et qu'il est fixé dans le tube réceptacle (4) au moyen d'un cône antagoniste (30) vissé sur le filetage externe (25).

2. Passage de conduite selon la revendication 1,**caractérisé en ce que** le raccord (5) du passage de conduite présente, en son extrémité regardant l'Impeder (1), une surface d'applique (13) présentant un tracé oblique par rapport à l'axe de la conduite et, à côté de la surface d'applique (13), contre sa surface circonférentielle externe, un filetage externe (14), en particulier un filetage à pas à droite, et que sur le filetage externe (14) est vissé une serrure (17) de pour relier le raccord (5) du passage de conduite avec l'Impeder (1) ou avec le rabot pour cordon de soudure interne.

3. Passage de conduite selon l'une des revendications 1 ou 2, **caractérisé en ce que** plusieurs alésages de passage (20) ont été ménagés dans la nervure (3), qui sont agencés les uns derrière les autres dans le sens de l'axe du tube réceptacle (4), et que la nervure (3) en particulier présente une épaisseur comprise entre 1,2 mm et 3 mm, et que les alésages de passage (20) en particulier présentent un diamètre compris entre 0,5 mm et 1,5 mm.

4. Passage de conduite selon la revendication 3, **caractérisé en ce qu'**au moins un faisceau d'alésages de passage (20) aboutit d'un côté dans une surface réceptacle (6) du corps de base (2) du passage de conduite, et de l'autre côté dans une zone (12) de jonction de fluides contre la surface circonférentielle interne du tube réceptacle (4).

5. Passage de conduite selon la revendication 4, **caractérisé en ce que** le raccord (5) du passage de conduite) présente au moins une conduite (24) de fluide qui aboutit d'un côté contre la surface applique (13) du raccord (5) de passage de conduite, et de l'autre dans un espace d'aboutissement (23) contre la surface circonférentielle externe du raccord (5) de passage de conduite.

6. Passage de conduite selon la revendication 5, **caractérisé en ce que** le diamètre interne du tube réceptacle (4) dans la zone (12) de jonction des fluides est un peu plus grand que le diamètre externe de raccord (5) de passage de conduite dans la zone d'aboutissement (23) et que la bouche de la conduite de fluides (24) au niveau du raccord (5) de passage de conduite est positionné de telle sorte qu'elle se trouve en face de la zone (12) de jonction des fluides du tube réceptacle (4) à l'état monté.

7. Passage de conduite selon l'une des revendications 1 à 6, **caractérisé en ce que** le tube réceptacle (4) présente, sur sa circonférence interne, une zone d'étanchéité (28) telle qu'une surface d'étanchéité, et que le raccord (5) de passage de conduite présente, sur sa surface circonférentielle externe, une rainure (27) et un joint (29) agencé dans ladite rainure (27), et **en ce que** le joint (29), lorsque le raccord (5) du passage de conduite se trouve à l'état monté, est positionné en face de la zone d'étanchéité (28) et/ou de la surface d'étanchéité du tube réceptacle (4).

8. Passage de conduite selon l'une des revendications 1 à 7, **caractérisé en ce que** le raccord (5) de passage de conduite présente une zone de rupture programmée (34) sous la forme d'un goujon destructible (35) dont un côté est agencé dans le raccord (5) du passage de conduite et dont l'autre côté est agencé contre le cône antagoniste (30), sachant que le goujon destructible (35) présente une zone de fragilisation (36) ciblée.

9. Module composé d'un passage de conduite selon l'une des revendications 1 à 8 et d'une suspension (31) configurée comme segment rotatif, suspension qu'il est possible de faire tourner de jusqu'à 20 degrés, et qui est en mesure de tenir le passage de conduite, sachant que contre le passage de conduite est prévu un raccord (7) présentant une surface d'applique (32) tandis que contre le segment rotatif est prévue une surface d'applique antagoniste (33) et sachant que la surface d'applique (32) et la surface d'applique antagoniste (33) peuvent être amenées l'une avec l'autre en jonction active.
